Europäisches Patentamt

(19) European Patent Office

Office européen des brevets

(11) Veröffentlichungsnummer: **0 208 913**
**B1**

(12) **EUROPÄISCHE PATENTSCHRIFT**

(45) Veröffentlichungstag der Patentschrift:
**18.01.89**

(51) Int. Cl.⁴: **B 29 C 65/20**

(21) Anmeldenummer: **86107987.9**

(22) Anmeldetag: **11.06.86**

(54) Verfahren und Vorrichtung zum stirnseitigen Verschweissen von Bündeln von Formkörpern aus thermoplastischem Kunststoff unter Druckanwendung.

(30) Priorität: **21.06.85 DE 3522190**

(43) Veröffentlichungstag der Anmeldung:
**21.01.87 Patentblatt 87/4**

(45) Bekanntmachung des Hinweises auf die Patenterteilung:
**18.01.89 Patentblatt 89/3**

(84) Benannte Vertragsstaaten:
**BE DE FR GB IT NL**

(56) Entgegenhaltungen:
**DE-A- 2 420 477**
**DE-C- 840 668**
**DE-C- 2 603 615**
**US-A- 2 994 361**
**US-A- 4 085 185**

(73) Patentinhaber: **Röhm GmbH, Kirschenallee**
**Postfach 4242, D-6100 Darmstadt 1 (DE)**

(72) Erfinder: **Gross, Heinz, Dr. Ing., Am Erlenbusch 2,**
**D-6109 Mühltal (DE)**
Erfinder: **Pöhlmann, Klaus Ernst, Silcherweg 9,**
**D-6100 Darmstadt (DE)**
Erfinder: **Schikowsky, Hartmut, Karlstrasse 1,**
**D-6100 Darmstadt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren und eine Vorrichtung zum stirnseitigen Verschweissen eines Bündels von Formkörpern aus thermoplastischem Kunststoff.

### Stand der Technik

Nach dem deutschen Gebrauchsmuster 84 29 157 werden Wärmetauscher aus einem Bündel aufeinanderliegender extrudierter Hohlkammerplatten aus Kunststoff stirnseitig mittels zwischen die Hohlkammern gelegten Heizbändern zu einem zusammenhängenden Bündel verschweisst. Diese Arbeitsweise ist bei manchen Hohlprofilkörpern, wie z.B. Rohren, schwer anwendbar.

In der DE-PS 2 603 615 wird eine Vorrichtung zum Verschweissen eines Rohrbündels aus thermoplastischem Kunststoff beschrieben, in der das Bündel zwischen zwei an die Stirnseiten angedrückte beheizte Platten, die den Rohren entsprechend ringförmige Nuten aufweisen, eingespannt wird. Die in die Nuten hineinragenden Rohrenden werden aufgeschmolzen und miteinander verschweisst. Dabei kann jedoch nur ein geringer Druck angewendet werden, weil sonst die Schmelze aus den Nuten, deren Weite grösser als die Wandstärke der Rohre ist, heraustreten würde. Der geringe anwendbare Druck gewährleistet jedoch keine einwandfreie Verschweissung der Rohrenden.

### Aufgabe und Lösung

Der Erfindung liegt die Aufgabe zugrunde, Bündel von Formkörpern aus thermoplastischem Kunststoff mit beliebigen Querschnitten, deren Stirnseiten in einer Fläche liegen und deren stirnseitige Enden flächig aneinanderliegen, durch ein verbessertes Verfahren bzw. eine verbesserte Vorrichtung zuverlässig und einwandfrei zu verschweissen.

Zur Lösung dieser Aufgabe geht die Erfindung von der bekannten Vorrichtung gemäss der oben erwähnten DE-PS 2 603 615 mit einer an die Stirnseite des Bündels andrückbaren Platte mit beheizbaren Nuten aus, die entsprechend dem Querschnitt des Bündels angeordnet sind und eine grössere Weite als die Dicke der entsprechenden, flächig aneinanderliegenden Enden der Formkörper haben. Bei Betätigung der Vorrichtung werden die flächig aneinanderliegenden Enden in die beheizten Nuten unter Druck eingesenkt, der Kunststoff geschmolzen und nach dem Zusammenfliessen der aus den aneinanderliegenden Enden entstandenen Schmelzen innerhalb der Nut unter die Schmelztemperatur gekühlt.

Bei der erfindungsgemässen Vorrichtung ist der Bodenbereich der Nuten auf oder über die Schmelztemperatur des Kunststoffes heizbar und der Eingangsbereich der Nuten allseitig gegenüber dem Bodenbereich thermisch isoliert und gegebenenfalls kühlbar, dass er im Betrieb unterhalb der Schmelztemperatur des Kunststoffes bleibt. Wenn der Wärmezufluss zum Eingangsbereich so hoch ist, dass dort die Schmelztemperatur überschritten würde, so ist dort eine Kühlvorrichtung anzubringen. Wichtig ist, dass der Eingangsbereich allseitig thermisch isoliert und gegebenenfalls kühlbar ist, d.h. an jeder Stelle, wo Kunststoffkörper in die Nut hineinragen. Dies gilt auch für seitliche Öffnungen der Nuten, wenn die Platte kleiner als die Stirnseite des Formkörperbündels ist. Bei dem erfindungsgemässen Schweissverfahren wird unter dem Druck der in die Nuten hineinragenden Enden der Formkörper der beheizte Raum der Nuten mit der Schmelze gefüllt und die Schmelze in den Spalt zwischen der Wandung des Nuteinganges hineinragenden Teil des Formkörpers getrieben, wo sie unter die Schmelztemperatur gekühlt wird und erstarrt.

### Vorteilhafte Wirkung der Erfindung

Die in den Eingangsspalt der Nut getriebene und dort erstarrende Schmelze bildet einen dichtenden Verschluss des beheizten Nutraumes. Dieser Verschluss verhindert allseitig das Entweichen der Schmelze aus der Nut. Es ist daher erfindungsgemäss möglich, einen Druck anzuwenden, bei dem der beheizte Raum der Nut vollständig mit der Kunststoffschmelze gefüllt wird und in welchem die aneinanderliegenden Enden der Hohlprofilkörper zuverlässig und einwandfrei unter Ausbildung einer durch die Gestalt der Nut definierten Nahtform miteinander verschweissen. Die thermische Isolierung bzw. die Kühlung des Eingangsbereiches hat nicht nur die Wirkung, dass die aus dem Bodenbereich austretende Schmelze dort erstarrt, sondern auch, dass die Enden der Hohlprofilkörper in diesem Teil der Nut nicht schmelzen und daher den Druck in den Bodenbereich der Nut zu übertragen vermögen.

### Anwendung der Erfindung

Das Verfahren und die Vorrichtung der Erfindung dienen zur Herstellung von verschweissten Bündeln von Formkörpern, die für die verschiedensten Zwecke geeignet sind. Eine bevorzugte Anwendung ist die Herstellung von Wärmetauschern oder Wärmespeichern. Bei der Anwendung der Bündel als Wärmespeicher wird Wärme von einem durchströmenden heissen Medium aufgenommen und in einer nachfolgenden Betriebsphase an ein kaltes Medium abgegeben. Für diese Anwendung genügt es, wenn das verschweisste Bündel von den Stirnseiten her durchströmbar ist.

Sind die verschweissten Bündel zum Wärmetausch zwischen zwei durchströmenden Medien von unterschiedlicher Temperatur vorgesehen, so müssen mindestens zwei voneinander getrennte Kanalsysteme vorhanden sein, von denen eines von den Stirnseiten aus zugänglich ist und das andere von den Seiten des Bündels aus durchströmt werden kann.

Typische Wärmespeicher- oder Wärmetauscherkörper haben Querschnittsflächen zwischen 0,1 und 6 qm und eine Länge zwischen 0,5 und 10 m. Die Erfindung gestattet jedoch ebenso die Herstellung noch grösserer oder kleinerer Bündel.

### Ausführung der Erfindung

Die Erfindung ist nicht auf das Verschweissen von Kunststofformkörpern von bestimmter Gestalt beschränkt. Ihre Gestalt ist beliebig, solange sie es gestattet, zwei oder mehr gleich oder verschieden geformte Körper so zu einem Bündel zusammenzufügen, dass ihre Ränder wenigstens in Teilbereichen flächig aufeinanderliegen und eine gemeinsame Kante bilden, die hier als «Stirnseite» bezeichnet wird. Bevorzugt werden dünnwandige Formkörper miteinander verschweisst.

Die in einem Arbeitsgang erfindungsgemäss zu verschweissende Stirnseite muss in einer Fläche liegen, die vorzugsweise, aber nicht notwendig, eine Ebene ist. Die Fläche kann auch gebogen, gewölbt oder geknickt sein. Ein Bündel kann an einer oder mehreren Stirnseiten verschweisst werden. Vorzugsweise liegen sich jeweils zwei Stirnseiten gegenüber, die gleichzeitig mit getrennten Werkzeugen, oder nacheinander verschweisst werden können.

Unter den Formkörpern sind solche mit gleichbleibendem Profil wenigstens im überwiegenden Teil ihrer Längsausdehnung und unter diesen wiederum solche mit einer oder mehreren Hohlkammern bevorzugt. Solche Formkörper sind durch Extrusion herstellbar und haben quer zur Extrusionsrichtung liegende Stirnflächen. Vorzugsweise haben alle in einem Bündel vereinigten Hohlprofilkörper die gleiche Länge, so dass sich daraus ein Bündel mit zwei ebenen Stirnflächen herstellen lässt. Vorzugsweise werden beide Stirnseiten — im Regelfall gleichzeitig — im Sinne der Erfindung verschweisst.

Es ist nicht immer erforderlich, dass die Formkörper auf dem gesamten Umfang ihres stirnseitigen Querschnitits miteinander verschweisst werden, sondern es genügt manchmal, wenn eine Zahl von Schweissstellen erzeugt wird, die die im Einzelfall gestellten Festigkeitsanforderungen erfüllt. Es ist für die Ausführbarkeit des Verfahrens unerheblich, ob die Enden an den nicht verschweissten Stellen flächig aneinanderliegen oder einen freien Abstand haben. Es kann jedoch zweckmässig sein, auch die nicht flächig aneinanderliegenden Teile der Enden in einer entsprechenden Nut aufzuschmelzen, damit die verschweisste Stirnseite in einer stufenlosen Fläche liegt. Deshalb sollten auch die Bodenflächen aller Nuten einer Platte in einer Fläche liegen.

Beim Verschweissen von Hohlprofilkörpern ist es erwünscht, dass an den Stirnflächen nur die Hohlkammern offen bleiben und dass keine Zwischenräume zwischen den einzelnen Hohlprofilkörpern von der Stirnseite her zugänglich sind. In diesen Fällen ist es erforderlich, dass die Hohlprofilkörper an den stirnseitigen Enden auf ihrem ganzen Umfang gegenseitig flächig aneinanderliegen, soweit dieser nicht in der Aussenseite des Bündels liegt. Die Hohlprofilenden können z.B. die Gestalt eines regelmässigen Sechskants haben und wie Bienenwaben aneinandergelegt sein. Hohlkammerplatten aus zwei glatten parallelen Aussenwänden und verbindenden Stegen können zu einem Stapel zusammengelegt und erfindungsgemäss stirnseitig verschweisst werden. Grundsätzlich eignen sich für derartige Bündel alle Hohlprofilkörper, deren Profilquerschnittsflächen sich zu einer geschlossenen Fläche zusammenfügen lassen.

Für die Zwecke der Erfindung genügt es, wenn nur die Enden der Hohlprofilkörper flächig aneinanderliegen. Der Querschnitt kann im übrigen, von den Stirnseiten entfernten Bereich eine andere Gestalt haben. Beispielsweise können Rohre mit überwiegend kreisrundem Querschnitt und zu einem regelmässigen Sechseckquerschnitt aufgeweiteten Enden verwendet werden. Der Bereich in welchem die Enden flächig aneinanderliegen, braucht nur wenig länger als die Tiefe der Nut zu sein. Für die Herstellung von Rohrbündelwärmetauschern werden zweckmässig Rohre mit aufgeweiteten Endstücken verwendet, wodurch beim Zusammenfügen zu einem Bündel zwischen den nicht aufgeweiteten Rohrabschnitten ein durchströmbarer Zwischenraum offenbleibt.

Als thermoplastische Kunststoffe kommen bei Raumtemperatur steife und im Bereich zwischen etwa 50 und 300 °C schmelzende Formmassen in Betracht. Die Erfindung ist jedoch nicht auf diese Temperaturgrenzen beschränkt. Mit der «Schmelztemperatur» wird diejenige Temperatur bezeichnet, bei der der Kunststoff in solchem Masse plastisch erweicht ist, dass zwei getrennt erzeugte Schmelzen wenigstens unter Druck zu einem nahtlos erstarrenden Körper zusammenfliessen. Sofern Schmelzen verschiedener Kunststoffe diese Voraussetzung erfüllen, können auch Kunststoffkörper aus diesen verschiedenen Kunststoffen zu einem Bündel verschweisst werden. Unterhalb der Schmelztemperatur liegen die Kunststoffe im thermoplastisch erweichten Zustand vor. Erst beim Abkühlen unter die Erweichungstemperatur gehen sie in den harten Zustand (Glaszustand) über. Als Beispiele geeigneter Kunststoffe seien Polyäthylen, Polypropylen, Polystyrol, Polyvinylchlorid, Polyacrylate, Polycarbonat, Polysulfone, Polyphenylenoxid, Polyätherimid, Polyäther-ätherketone oder Polyamide, genannt.

Die Erfindung wird nachfolgend anhand der Figuren 1 bis 4 am Beispiel der Verschweissung eines Hohlprofilkörperbündels erläutert, ohne den Schutzumfang auf diese Ausführungsform zu beschränken. Es zeigen:

Fig. 1 einen vergrösserten Querschnitt durch eine heiz- und kühlbare Nut mit den darin eingesenkten Enden der Hohlprofilkörper,

Fig. 2 die Stirnseite eines Rohrbündels und gestrichelt den Querschnitt im mittleren Bereich,

Fig. 3 eine Draufsicht auf die mit beheizbaren Nuten ausgerüstete, an das Rohrbündel gemäss Figur 2 andrückbare Platte,

Fig. 4 einen Querschnitt längs der Linie IV-IV durch die in Figur 3 dargestellte Platte.

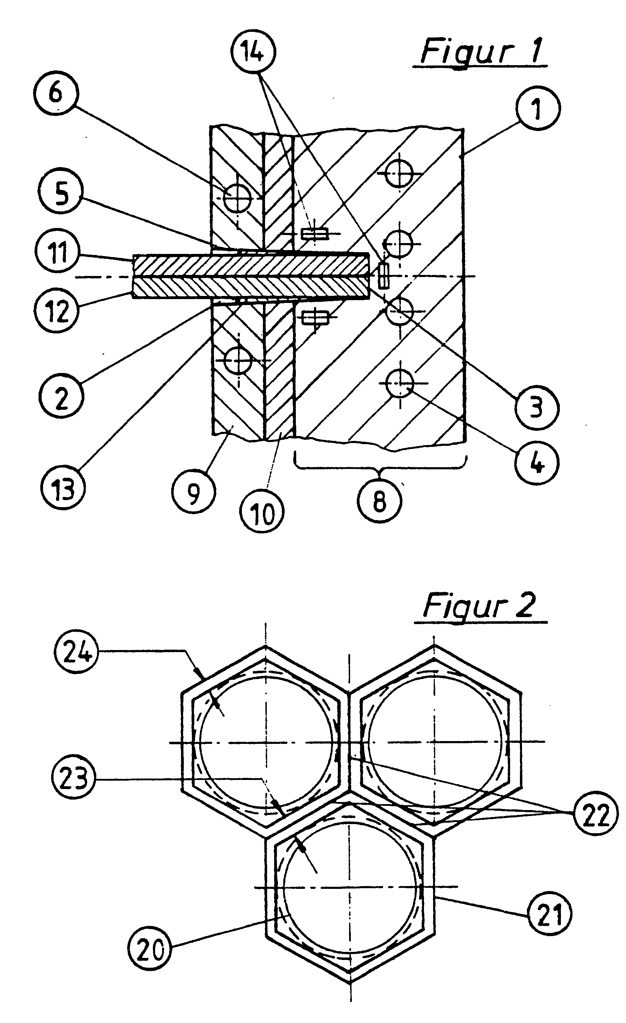

In Figur 1 stellt 1 die an das Hohlprofilbündel andrückbare Platte mit der Nut 2 dar. Der Boden 3 der Nut ist durch Heizelemente 4 oder mit einem Heizmedium durchströmbare Kanäle 4 auf die Schmelztemperatur des Kunststoffes oder darüber heizbar. Der Eingang 5 der Nut ist über einen Kühlmittelkanal 6 kühlbar. Die Versorgungsleitungen für die Heiz- oder Kühlelemente 4 bzw. 6 sind aus Gründen der Übersichtlichkeit nicht eingezeichnet. Der über die Schmelztemperatur heizbare Teil 8 der Platte 2 besteht vorzugsweise aus Metall, wie Stahl, Aluminium oder Messing. Der thermisch isolierte Teil 9 kann ebenfalls aus Metall bestehen. Dazwischen ist zweckmässigerweise eine Schicht 10 aus wärmeisolierendem Material, z.B. ein Mineralfaservlies oder eine wärmebeständige, gegebenenfalls mit Fasern oder Geweben verstärkte Kunststoffpressmasse oder ein Keramikkörper, eingelegt. Manchmal genügt es, wenn der thermisch isolierte Teil 9 selbst aus einem derartigen wärmeisolierenden Material besteht.

Zum Verschweissen zweier Endstücke 11, 12 aus Polyphenylenoxid wird der Boden 3 der Nut auf 240 bis 280°C geheizt und der Eingang 5 durch Kühlung auf einer Temperatur unterhalb 130°C gehalten. Es wird allgemein bevorzugt, den Eingangsbereich auf einer Temperatur unterhalb der Erweichungstemperatur des Kunststoffes zu halten. Der über die Einpresskraft erzeugte Druck im beheizten Nutbereich liegt z.B. zwischen 0,6 und 100 N/cm². Dadurch fliessen Schmelzströme 13 vom Boden 3 der Nut in den Eingangsspalt, wo sie bei Berührung mit der kühlen Wandung 5 des Eingangs erstarren. Sobald das in den beheizten Nutraum hineinragende Material homogen zusammengeschmolzen und der Nutraum völlig ausgefüllt ist, kann die Heizung abgestellt und das Material in der Nut unter die Schmelztemperatur, vorzugsweise unter die Erweichungstemperatur abgekühlt werden. Wenn dies durch Wärmeabgabe an die Umgebungsluft nicht schnell genug geschieht, kann die Abkühlung durch ein Kühlsystem unterstützt werden. Dazu können die Kanäle 4 oder besondere Kühlmittelkanäle 14 mit einem Kühlmittel durchströmt werden. Nach der Abkühlung kann die Schweissstelle aus der Nut herausgenommen werden. Dies wird durch einen schwach keilförmigen Querschnitt der Nut erleichtert.

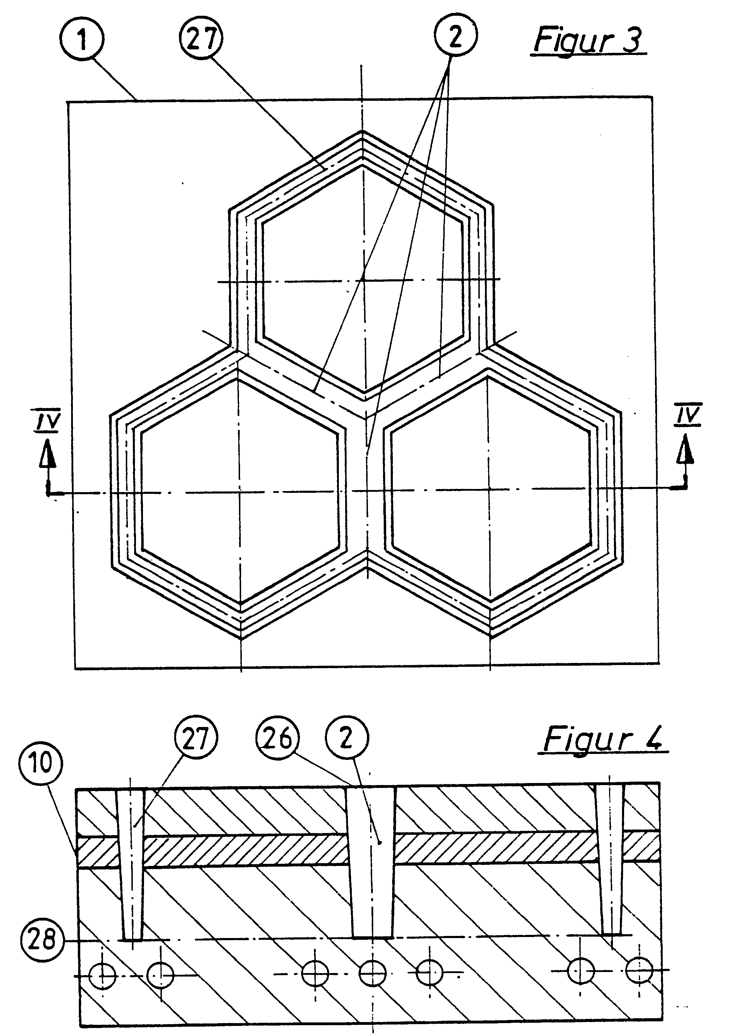

Das in Fig. 2 dargestellte Rohrbündel ist aus drei kreisrunden Rohren 20 mit sechseckförmig aufgeweiteten Endstücken 21 zusammengesetzt. Die Endstücke liegen in den Bereichen 22 flächig aneinander. Die Wanddicke 23 beträgt in diesem Bereich beispielsweise 1 bis 8 mm, in den Bereichen 24 die Hälfte, als 0,5 bis 4 mm.

Zum Verschweissen wird das in Figur 2 gezeigte Rohrbündel in die Platte 1 gemäss Figur 3 eingesenkt. Die zum Verschweissen der Endstücke vorgesehenen Nuten 2 haben im Eingangsbereich 26 eine grössere Weise als die Wanddicke 23, können aber zum Nutgrund hin auf eine der Wanddicke 23 entsprechende Weite oder noch weniger zusammenlaufen. Die Randnut 27 dient nur dazu, die Aussenwand auf die gleiche Ebene 28 wie die zu verschweissenden Bereiche abzuschmelzen.

Grundsätzlich genügt eine Platte 1 zur Durchführung des Verfahrens. Es ist jedoch bevorzugt, die beiden Stirnseiten eines Bündels gleichzeitig mittels zweier Platten 1 zu verschweissen. Diese werden während des Schweissverfahrens parallel zueinander um den Betrag, um den die Endstücke in die Nuten eingesenkt werden, aufeinanderzu bewegt. Dazu wird zweckmässig eine Schubvorrichtung benutzt, die wenigstens eine der Platten bewegt und den zum Verschweissen erforderlichen Druck erzeugt. Die Platten sind parallel verschiebbar auf einem Traggestell angeordnet, welches vorzugsweise noch eine Haltevorrichtung zur Aufnahme des Bündels vor und nach dem Schweissvorgang trägt.

## Patentansprüche

1. Vorrichtung zum stirnseitigen Verschweissen eines Bündels von Formkörpern aus thermoplastischem Kunststoff, deren Stirnseiten in einer Fläche liegen und deren stirnseitige Enden flächig aneinanderliegen, enthaltend eine an die Stirnseite des Bündels andrückbare heiz- und kühlbare Platte (1), die mit Nuten (2) versehen ist, wobei die Nuten entsprechend dem Querschnitt der Stirnseite des Bündels angeordnet sind und eine grössere Weite als die Dicke der in die Nuten einzusenkenden flächig aneinanderliegenden Enden haben, dadurch gekennzeichnet, dass der Bodenbereich (3) der Nuten auf oder über die Schmelztemperatur des Kunststoffes heizbar und der Eingangsbereich der Nuten allseitig gegenüber dem Bodenbereich derart thermisch isoliert und gegebenenfalls kühlbar ist, dass er im Betrieb unterhalb der Schmelztemperatur des Kunststoffes bleibt.

2. Vorrichtung nach Anspruch 1, dadurch gekennzeichnet, dass in dem Eingangsbereich (5) der Nuten eine Kühlvorrichtung (6) angeordnet ist.

3. Vorrichtung nach Anspruch 1, dadurch gekennzeichnet, dass der Eingangsbereich (5) der Nut aus einem wärmeisolierenden Material besteht.

4. Vorrichtung nach den Ansprüchen 1 bis 3, dadurch gekennzeichnet, dass sie zwei gegenüberliegende, an die Stirnseiten des Bündels andrückbare Platten zum gleichzeitigen Verschweissen beider Stirnseiten aufweist.

5. Verfahren zum stirnseitigen Verschweissen eines Bündels von Formkörpern aus thermoplastischem Kunststoff, deren Stirnseiten in einer Fläche liegen und deren stirnseitige Enden flächig aneinanderliegen, durch Einsenken der flächig aneinanderliegenden Enden unter Druck in beheizte Nuten, in denen der Kunststoff geschmolzen und nach dem Zusammenfliessen der aus den aneinanderliegenden Enden entstandenen Schmelzen innerhalb der Nut unter die Schmelztemperatur gekühlt wird, dadurch gekennzeichnet, dass unter dem Druck der Enden der beheizte Raum der Nuten mit der Schmelze gefüllt und diese in die Randbereiche der Nut getrieben wird, und dass die Schmelze dort unter die Schmelztemperatur gekühlt wird.

6. Verfahren nach Anspruch 5, dadurch gekennzeichnet, dass die Schmelze in den Randbereichen der Nuten unter die Erweichungstemperatur gekühlt wird.

7. Verfahren nach den Ansprüchen 5 und 6, dadurch gekennzeichnet, dass die Schmelze im Bodenbereich der Nut unter die Erweichungstemperatur gekühlt wird.

8. Verfahren nach den Ansprüchen 5 bis 7, dadurch gekennzeichnet, dass Bündel von extrudierten Formkörpern verschweisst werden.

9. Verfahren nach Anspruch 8, dadurch gekennzeichnet, dass Bündel von extrudierten Hohlprofilkörpern verschweisst werden.

10. Verfahren nach den Ansprüchen 1 bis 9, dadurch gekennzeichnet, dass dünnwandige Formkörper verschweisst werden.

## Claims

1. Apparatus for welding the end face of a bundle of mouldings of thermoplastic plastics, the end faces of which lie in one plane and the ends of which abut flatly on one another, containing a heatable and coolable plate (1) which can be pressed against the end face of the bundle and is provided with grooves (2), the groove being arranged in accordance with the cross section of the end face of the bundle and the width of the groove being greater than the thickness of the flatly abutting ends which are to be pressed into the grooves, characterised in that the base region (3) of the grooves can be heated up to or above the melting temperature of the plastics and the entry region of the grooves is thermally insulated from the base region at all points and is capable of being cooled if necessary so that in operation it remains below the melting temperature of the plastics.

2. Apparatus as claimed in claim 1, characterised in that a cooling device (6) is provided in the entry region (5) of the grooves.

3. Apparatus as claimed in claim 1, characterised in that the entry region (5) of the groove consists of a thermally insulating material.

4. Apparatus as claimed in claims 1 to 3, characterised in that it comprises two opposing plates which can be pressed against the end faces of the bundle in order to weld both end faces simultaneously.

5. Process for welding the end faces of a bundle of mouldings of thermoplastic plastics, the end faces of which are located in one plane and the ends of which abut flatly on one another, by pressing the flatly abutting ends under pressure into heated grooves in which the plastics material is melted and, after the melts formed from the abutting ends have coalesced within the groove, the material is cooled to below the melting temperature, characterised in that under the pressure of the ends the heated space of the grooves is filled with the melt and this melt is forced into the edge areas of the groove and there the melt is cooled to below the melting temperature.

6. Process as claimed in claim 5, characterised in that the melt in the edge areas of the grooves is cooled to below the softening temperature.

7. Process as claimed in claims 5 and 5, characterised in that the melt in the base region of the groove is cooled to below the softening temperature.

8. Process as claimed in claims 5 to 7, characterised in that bundles of extruded mouldings are welded.

9. Process as claimed in claim 8, characterised in that bundles of extruded hollow profiled members are welded.

10. Process as claimed in claims 1 to 9, characterised in that thin-walled mouldings are welded.

**Revendications**

1. Dispositif pour le soudage par leurs faces frontales d'un faisceau de corps moulés en matière thermoplastique, dont les faces frontales sont dans un même plan et dont les extrémités frontales sont juxtaposées dans un même plan, comprenant une plaque (1) chauffable et refroidissable et susceptible d'être pressée contre le côté frontal du faisceau, cette plaque présentant des gorges (2), qui sont disposées de façon à correspondre à la section transversale du côté frontal du faisceau et dont la largeur est supérieure à l'épaisseur desdites extrémités accolées dans un même plan et destinées à être descendues dans les gorges, caractérisé en ce que la région du fond (3) des gorges est chauffable à une température égale ou supérieure à la température de fusion de la matière plastique et en ce que la région d'entrée des gorges de tous côtés au droit de la région du fond est isolée thermiquement et éventuellement refroidissable de telle sorte qu'en fonctionnement elle demeure au-dessous de la température de fusion de la matière plastique.

2. Dispositif suivant la revendication 1, caractérisé en ce qu'un dispositif de refroidissement (6) est placé dans la région d'entrée (5) des gorges.

3. Dispositif suivant la revendication 1, caractérisé en ce que la région d'entrée (5) des gorges est en un matériau thermiquement isolant.

4. Dispositif suivant l'une quelconque des revendications 1 à 3, caractérisé en ce qu'il comprend deux plaques disposées en vis-à-vis et susceptibles d'être pressées contre les côtés frontaux du faisceau pour le soudage simultané des deux côtés frontaux.

5. Procédé pour le soudage par leurs faces frontales d'un faisceau de corps moulés en matière thermoplastique, lesdites faces frontales étant situées dans un même plan et les extrémités de ces faces frontales étant accolées dans un même plan, par enfoncement sous pression les dites extrémités accolées dans un même plan dans des gorges chauffées, dans lesquelles la matière plastique est fondue, puis est refroidie au-dessous de la température de fusion, après le mélange à l'intérieur de la gorge des matières fondues provenant desdites extrémités accolées, caractérisé en ce que sous la pression des extrémités, l'espace chauffé des gorges est rempli de la matière en fusion et celle-ci est chassée vers les bords de la gorge, et en ce que, dans cette région des bords, la matière fondue est refroidie au-dessous de la température de fusion.

6. Procédé suivant la revendication 5, caractérisé en ce que la matière fondue, dans la région des bords des gorges, est refroidie au-dessous de la température de ramollissement.

7. Procédé suivant la revendication 5 ou 6, caractérisé en ce que la matière en fusion dans la région du fond de la gorge est refroidie au-dessous de la température de ramollissement.

8. Procédé suivant l'une quelconque des revendications 5 à 7, caractérisé en ce que l'on soude des faisceaux de corps moulés extrudés.

9. Procédé suivant la revendication 8, caractérisé en ce que l'on soude des faisceaux de profilés creux extrudés.

10. Procédé suivant l'une quelconque des revendications 1 à 9, caractérisé en ce que l'on soude des corps moulés à parois minces.

_Figur 1_

_Figur 2_

① ㉗ ② *Figur 3*

IV̄ ↑ IV̄ ↑

⑩ ㉗ ㉖ ② *Figur 4*

㉘